# EUROPÄISCHE PATENTSCHRIFT

(11) **EP 1 248 709 B1**
(45) Veröffentlichungstag und Bekanntmachung des Hinweises auf die Patenterteilung: **10.09.2003**
(21) Anmeldenummer: 01929451.1
(22) Anmeldetag: 24.03.2001
(51) Int. Cl.: B60G 7/00

(54) **STABILISIERUNGSSTREBE, INSBESONDERE FÜR EIN FAHRWERK EINES FAHRZEUGS SOWIE VERFAHREN ZUR HERSTELLUNG DERSELBEN**
STABILIZING STRUT, IN PARTICULAR, FOR A VEHICLE CHASSIS AND METHOD FOR THE PRODUCTION THEREOF
MONTANT DE STABILISATION, NOTAMMENT POUR CHASSIS DE VEHICULE ET PROCEDE PERMETTANT DE LE PRODUIRE

(30) Priorität: 27.03.2000 DE 10014581
(43) Veröffentlichungstag der Anmeldung: 16.10.2002
(73) Patentinhaber: Progress-Werk Oberkirch Aktiengesellschaft, 77704 Oberkirch (DE)
(72) Erfinder: HUBER, Konrad, 77704 Oberkirch (DE); MERKLE, Hans, 79346 Endingen (DE); SCHMIEDER, Hansjörg, 77704 Oberkirch-Zusenhofen (DE)
(74) Vertreter: Heuckeroth, Volker, Dr.
(86) Internationale Anmeldenummer: EP0103382
(87) Internationale Veröffentlichungsnummer: WO01072539

(56) Entgegenhaltungen:
- US-A- 5 310 211
- US-A- 5 597 175
- US-A- 6 010 155
- US-A- 6 019 383

## Beschreibung

Die Erfindung betrifft eine Stabilisierungsstrebe, insbesondere für ein Fahrwerk eines Fahrzeugs, insbesondere eine Wattstrebe, mit einem länglichen Strebenkörper, der als Profil ausgebildet ist.

Die Erfindung betrifft ferner ein Verfahren zum Herstellen einer solchen Stabilisierungsstrebe, wobei ein Strebenkörper aus einem plattenförmigen Rohling zu einem Profil geformt wird.

Eine Stabilisierungsstrebe sowie ein Verfahren zu ihrer Herstellung der eingangs genannten Art sind aus dem Dokument US 6 019 383 A bekannt.

Eine spezielle Stabilisierungsstrebe, die in manchen Fahrwerken von Fahrzeugen verwendet wird, ist die Wattstrebe. Die Wattstrebe ist Teil des Wattgestänges, das vornehmlich bei starrachsigen Fahrzeugen eingesetzt wird, um seitliche Bewegungen der Starrachse zu reduzieren. Bei dem Wattgestänge wird ein in der Mitte drehbar gelagerter Hebel beispielsweise am Differential gelagert und nach beiden Seiten von je einer gleich langen, am Wagenkasten befestigten Stabilisierungsstrebe bzw. Wattstrebe geführt. Durch diese Anlenkung ist nur eine exakte vertikale Bewegung des geführten Hebels möglich.

Die Erfindung ist jedoch nicht auf eine Wattstrebe beschränkt.

Die bislang bekannten Stabilisierungsstreben weisen einen länglichen Strebenkörper auf, der als Profil ausgebildet ist. Die aus dem obengenannten Dokument US 6 019 383 A bekannte Stabilisierungsstrebe weist ein durchgehend U-förmiges Profil auf, das demnach einseitig durchgehend offen ist.

In Längsrichtung des Strebenkörpers ist der Strebenkörper weiterer bekannter Stabilisierungsstreben einteilig ausgebildet. In Umfangsrichtung ist der Strebenkörper der bekannten Stabilisierungsstreben zweiteilig ausgebildet. Das Profil der bekannten Stabilisierungsstreben ist in der Regel ein umfänglich geschlossenes Kastenprofil, mit einem Bodenabschnitt, der im Querschnitt U-förmig geformt ist, wobei die offene Seite des U mit einem Deckblech verschlossen ist, das sich über die gesamte Länge des Strebenkörpers erstreckt. Ein solches allseitig geschlossenes Profil gewährleistet die für eine solche Stabilisierungsstrebe erforderliche Biegesteifigkeit. Andere bekannte Bauweisen von Stabilisierungsstreben sind durchgehend umfänglich geschlossene Rohre.

Nachteilig an den bekannten Stabilisierungsstreben ist, daß sie aufgrund ihrer vorgeschriebenen Bauweise ein hohes Gewicht besitzen, und, da das Deckblech über die gesamte axiale Länge mit dem Bodenprofil verschweißt oder verlötet werden muß, auch das Herstellungsverfahren zeitaufwendig und materialaufwendig, mithin kostenaufwendig ist. Ein weiterer Nachteil besteht darin, daß die Oberflächentechnik im Innenraum der Stabilisierungsstrebe nicht richtig angewendet werden kann. Die Innenseite des geschlossenen Profils kann beispielsweise nicht lackiert werden, wodurch eine erhöhte Korrosionsgefahr besteht.

Der Erfindung liegt daher die Aufgabe zugrunde, eine Stabilisierungsstrebe sowie ein Verfahren zum Herstellen derselben der eingangs genannten Art dahingehend weiterzubilden, daß die Stabilisierungsstrebe trotz gewährleisteter Biegesteifigkeit gewichtsärmer ist, das Herstellungsverfahren mit weniger Kostenaufwand durchgeführt werden kann, und die Oberflächentechnik innenseitig gut angewendet werden kann.

Hinsichtlich der eingangs genannten Stabilisierungsstrebe wird diese Aufgabe dadurch gelöst, daß der Strebenkörper als entlang seiner Längsrichtung zumindest abschnittsweise im Querschnitt einseitig offenes Profil geformt ist, dessen beide Längsränder zumindest axial abschnittsweise miteinander einstückig zu einem geschlossenen Profil verbunden sind.

Bei dem Verfahren wird die der Erfindung zugrunde liegende Aufgabe erfindungsgemäß dadurch gelöst, daß der Strebenkörper zunächst zu einem im Querschnitt einseitig offenen Profil geformt wird, und dessen Längsränder zumindest axial abschnittsweise einstückig zu einem geschlossenen Profil miteinander verbunden werden.

Die erfindungsgemäße Stabilisierungsstrebe löst sich von dem Konzept der bekannten Stabilisierungsstreben, ein axial durchgehend geschlossenes Kastenprofil mit einem Boden- und einem separaten Deckelteil oder als Rohr auszubilden. Statt dessen wird die erfindungsgemäße Stabilisierungsstrebe durch Formen eines einseitig offenen Profils hergestellt, das axial abschnittsweise und somit axial begrenzt umfänglich geschlossen wird. Im Unterschied zu den bekannten Stabilisierungsstreben, bei denen das Bodenkastenprofil mit einem separaten Deckelblech verschlossen wird, so daß der Strebenkörper der bekannten Stabilisierungsstreben in Umfangsrichtung mehrteilig ist, sind bei der erfindungsgemäßen Stabilisierungsstrebe die geschlossenen Abschnitte des Strebenkörpers in Umfangsrichtung einteilig, indem die beiden Längsränder in diesen Bereichen einstückig zu dem geschlossenen Profil verbunden sind. Die erfindungsgemäße Stabilisierungsstrebe ist somit einerseits gewichtsarm, durch die Ausbildung als axial abschnittsweise geschlossenes Profil jedoch gleichzeitig biegesteif. Das erfindungsgemäße Herstellungsverfahren ist weniger zeitaufwendig, materialsparend und somit kostengünstig, und die Innenseite des Profils läßt sich zu jeder Zeit gut behandeln.

In einer bevorzugten Ausgestaltung der Stabilisierungsstrebe sind die Längsränder mittels zumindest einer sich über einen in Längsrichtung des Strebenkörpers axial teilweise erstreckenden Lasche verbunden, die an zumindest einem der Längsränder einstückig angeformt ist.

Diese Maßnahme stellt eine herstellungstechnisch besonders günstige Möglichkeit dar, die beiden Längsränder axial abschnittsweise miteinander einstückig zu einem geschlossenen Profil zu verbinden. Die zumindest eine Lasche, bevorzugt die in Längsrichtung der Stabilisierungsstrebe verteilten mehreren Laschen, trägt zur Erhöhung der Biegesteifigkeit der erfindungsgemäßen Stabilisierungsstrebe bei, und trotzdem wird Gewicht durch die axiale Begrenzung der Laschen eingespart.

Im Rahmen dieser Ausgestaltung kann vorteilhafterweise an beiden Längsrändern jeweils eine Lasche angeformt sein, so daß die beiden Laschen einander gegenüberliegen und zwischen den Längsrändern miteinander verbunden sind. Es kann aber auch die Lasche an dem einen Längsrand einstückig angeformt sein, bis zum gegenüberliegenden Längsrand ragen und mit diesem verbunden sein, so daß sich im Überlappbereich der Lasche mit dem gegenüberliegenden Längsrand vorteilhafterweise eine klassische Kehlnahtschweißverbindung anwenden läßt.

In einer weiteren bevorzugten Ausgestaltung verläuft die zumindest eine Lasche quer oder schräg zur Längsrichtung des Strebenkörpers in der Art eines Stegs.

Weiterhin ist es bevorzugt, wenn zumindest zwei Laschen vorhanden sind, die miteinander ein V bilden.

Durch diese Anordnung der Laschen kann die Biegesteifigkeit der Stabilisierungsstrebe noch weiter verbessert werden, weil in verschiedene Richtungen wirkende Zug- oder Druckbelastungen durch die V-förmige Anordnung der Laschen besser aufgenommen werden können. Hierbei können mehrere Laschen in Form mehrerer V eine Zick-Zack-Anordnung bilden.

Die zumindest eine Lasche kann gemäß einer weiteren bevorzugten Ausgestaltung auch bogenförmig ausgebildet sein, wobei die Lasche an zwei axial beabstandeten Stellen an dem selben Längsrand des Strebenkörpers angeformt ist.

Im Rahmen der vorliegenden Erfindung können außer den zuvor genannten beispielhaften Ausgestaltungen weitere für die eine oder mehreren Laschen in Betracht gezogen werden, die entsprechend zur Erhöhung der Biegesteifigkeit der Stabilisierungsstrebe beitragen.

Die Verbindung der Längsränder des Strebenkörpers mittels zumindest einer Lasche ist insbesondere dann vorteilhaft, wenn der Strebenkörper als Stanzteil hergestellt ist, wobei die zumindest eine Lasche durch den Stanzvorgang durch Stehenlassen von Material an einem der Längsränder ausgebildet ist.

Bei dem erfindungsgemäßen Verfahren wird dazu der plattenförmige Rohling als Stanzteil gefertigt, an dem zumindest eine Lasche beim Stanzen duch Stehenlassen von Material angeformt wird, über die die Längsränder des Strebenkörpers nach der Formung zu dem Profil miteinander verbunden werden.

Durch diese Maßnahmen läßt sich die erfindungsgemäße Stabilisierungsstrebe mit nur wenigen Fertigungsschritten herstellen, nämlich Stanzen, Umformen zu dem Profil, gegebenenfalls Umbiegen der zumindest einen Lasche und Verbinden der beiden Längsränder des Strebenkörpers über die zumindest eine Lasche. Als Verbindungstechnik kann jedes bekannte Verfahren verwendet werden, beispielsweise Schweißen, Löten oder Kleben.

In einer weiteren bevorzugten Ausgestaltung ist der Strebenkörper zumindest axial abschnittsweise im wesentlichen als U-Profil geformt, das axial abschnittsweise durch Verbindung der Längsränder geschlossen ist.

Auf diese Weise entsteht ein axial nur abschnittsweise geschlossenes Kastenprofil, das eine besonders hohe Biegesteifigkeit besitzt.

In einer besonders einfachen Ausgestaltung der erfindungsgemäßen Stabilisierungsstrebe ist der Strebenkörper zumindest axial abschnittsweise im wesentlichen als im Querschnitt dreieckiges Profil geformt, das an den Längsrändern durch direktes Verbinden der Längsränder geschlossen ist. In offenen Bereichen kann das Profil dann beispielsweise im Querschnitt U-förmig sein.

In dieser Ausgestaltung ergibt sich eine vorteilhafterweise besonders gewichtsarme und besonders kostengünstig herstellbare Stabilisierungsstrebe, die sich durch einen einzigen Umformvorgang mit anschließender abschnittsweiser oder durchgehender Fügung der Längsränder aus einem einfachen rechteckigen, plattenförmigen Rohling fertigen läßt.

In einer weiteren bevorzugten Ausgestaltung weist der Strebenkörper in Längsrichtung hinsichtlich Form und/oder Querschnittsgröße einen unterschiedlichen Querschnitt auf.

Durch solche Querschnittsänderungen, beispielsweise Aufweitungen des Querschnitts an verschiedenen Stellen des Strebenkörpers, kann die Biegesteifigkeit weiter erhöht werden. Auch kann beispielsweise im Zusammenhang mit den zuvor erwähnten Ausgestaltungen der Strebenkörper abschnittsweise ein U-förmiges Profil und abschnittsweise ein durch direktes Verbinden der Längsränder im Querschnitt dreieckiges Profil aufweisen.

In einer weiteren bevorzugten Ausgestaltung der erfindungsgemäßen Stabilisierungsstrebe ist an den Längsenden des Strebenkörpers jeweils eine Lagerbuchse angeordnet.

Wenn die Lagerbuchsen einstückig angeformt sind, kann die gesamte Stabilisierungsstrebe einteilig aus einem Rohling durch Stanzen, Umformen und Fügen auf besonders einfache Weise gefertigt werden. Die Lagerbuchsen können jedoch auch nachträglich in Form von Rohrstücken separat, beispielsweise durch Schweißen, angefügt werden.

In einer weiteren bevorzugten Ausgestaltung ist der Strebenkörper in Längsrichtung aus zumindest zwei Profilteilen zusammengesetzt, die in Längsrichtung einander teilweise überlappend angeordnet und im Überlappungsbereich miteinander verbunden sind.

Hierbei wird zwar in Längsrichtung des Strebenkörpers eine mehrteilige Bauweise in Kauf genommen, die jedoch den Vorteil hat, daß an den Längsenden des zusammengesetzten Strebenkörpers angeordnete Lagerbuchsen zueinander nicht parallele Lagerachsen aufweisen können. Dies kann aus baulichen Gründen des Fahrwerks, in das die Stabilisierungsstrebe eingebaut werden soll, von Vorteil sein, weil die vorgegebenen räumlichen Gegebenheiten auf diese Weise besser ausgenutzt werden können. Dies ist mit den eingangs genannten herkömmlichen Bauweisen nicht einfach zu erreichen. Durch die in axialer Richtung mehrteilige Ausgestaltung des Strebenkörpers lassen sich die einzelnen Profilteile mit einem Winkelversatz zueinander zusammenfügen, wodurch auf diese Weise eine nicht-gerade Stabilisierungsstrebe hergestellt werden kann.

Dabei können die Profilteile mit ihrer jeweiligen Offenseite in die gleiche Richtung zeigend zu dem Strebenkörper gefügt sein, ebenso bevorzugt ist es, wenn die Profilteile mit ihrer jeweiligen Offenseite in entgegengesetzte Richtung zeigend zu dem Strebenkörper gefügt sind.

Bei der letzteren Ausgestaltung entsteht im Überlappungsbereich der Profilteile ein umfänglich geschlossenes Profil, wodurch die Biegesteifigkeit noch weiter erhöht werden kann.

Weitere Vorteile und Merkmale ergeben sich aus der nachfolgenden Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:
- Fig. 1: eine unterbrochene Gesamtdarstellung einer Stabilisierungsstrebe in Draufsicht;
- Fig. 2: einen Ausschnitt der Stabilisierungsstrebe in Fig. 1 in Seitenansicht;
- Fig. 3: einen Schnitt entlang der Linie III-III in Fig. 1;
- Fig. 4: einen Schnitt entlang der Linie IV-IV in Fig. 1;
- Fig. 4a: eine der Fig. 4 vergleichbare Schnittdarstellung gemäß einem gegenüber Fig. 1 abgewandelten Ausführungsbeispiel;
- Fig. 5: eine der Fig. 3 vergleichbare Schnittdarstellung gemäß einem gegenüber Fig. 1 abgewandelten Ausführungsbeispiel;
- Fig. 6: einen Ausschnitt einer Stabilisierungsstrebe gemäß einem weiteren Ausführungsbeispiel in Draufsicht;
- Fig. 7: ein noch weiteres Ausführungsbeispiel einer Stabilisierungsstrebe in Draufsicht;
- Fig. 8: ein noch weiteres Ausführungsbeispiel einer Stabilisierungsstrebe in Draufsicht; und
- Fig. 9: einen Schnitt entlang der Linie IX-IX in Fig. 8.

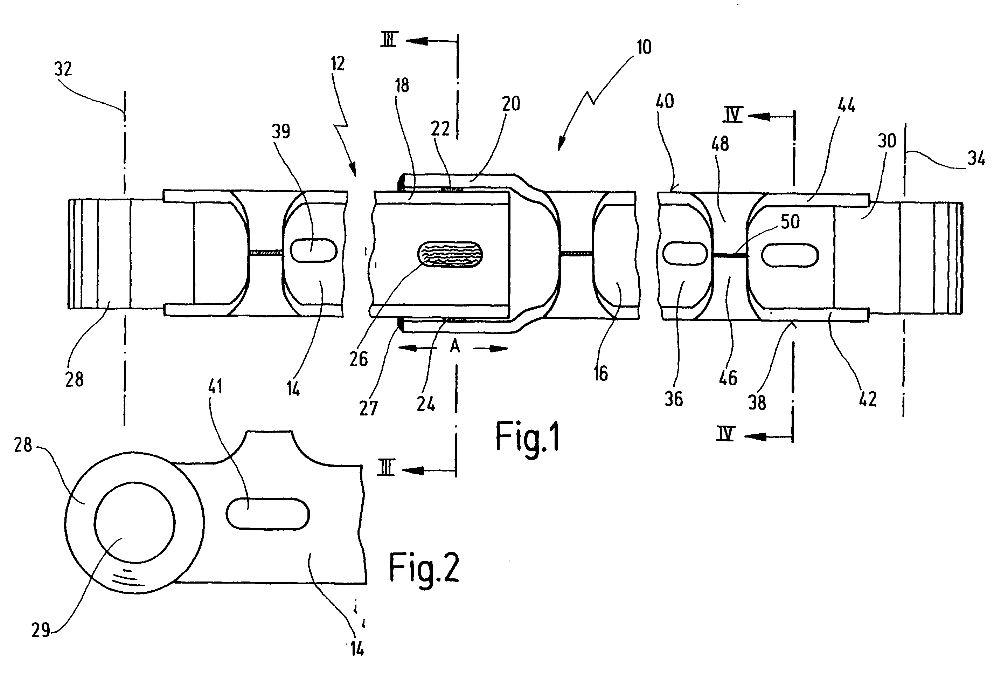

In Figuren 1 bis 4 ist eine mit dem allgemeinen Bezugszeichen 10 versehene Stabilisierungsstrebe dargestellt. Die Stabilisierungsstrebe 10 wird in einem Fahrwerk eines Fahrzeugs als Wattstrebe verwendet.

Die Stabilisierungsstrebe 10 weist einen länglichen Strebenkörper 12 auf, der als Profil ausgebildet ist.

Der Strebenkörper 12 ist in Längsrichtung des Strebenkörpers 12 aus zumindest zwei Profilteilen 14 und 16 gefügt, die in Längsrichtung des Strebenkörpers 12 in einem mit A bezeichneten Überlappungsbereich einander teilweise überlappend angeordnet und miteinander verbunden sind. Dazu ist ein axialer Endabschnitt 18 des ersten Profilteils 14 in einen axialen Endabschnitt 20 des zweiten Profilteils 16 eingeschoben. Der axiale Endabschnitt 20 des zweiten Profilteils 16 ist entsprechend mit einem erweiterten Querschnitt geformt. Umgekehrt könnte jedoch auch der axiale Endabschnitt 18 des ersten Profilteils 14 mit einem gegenüber dem übrigen Profilteil 14 verringerten Querschnitt geformt sein.

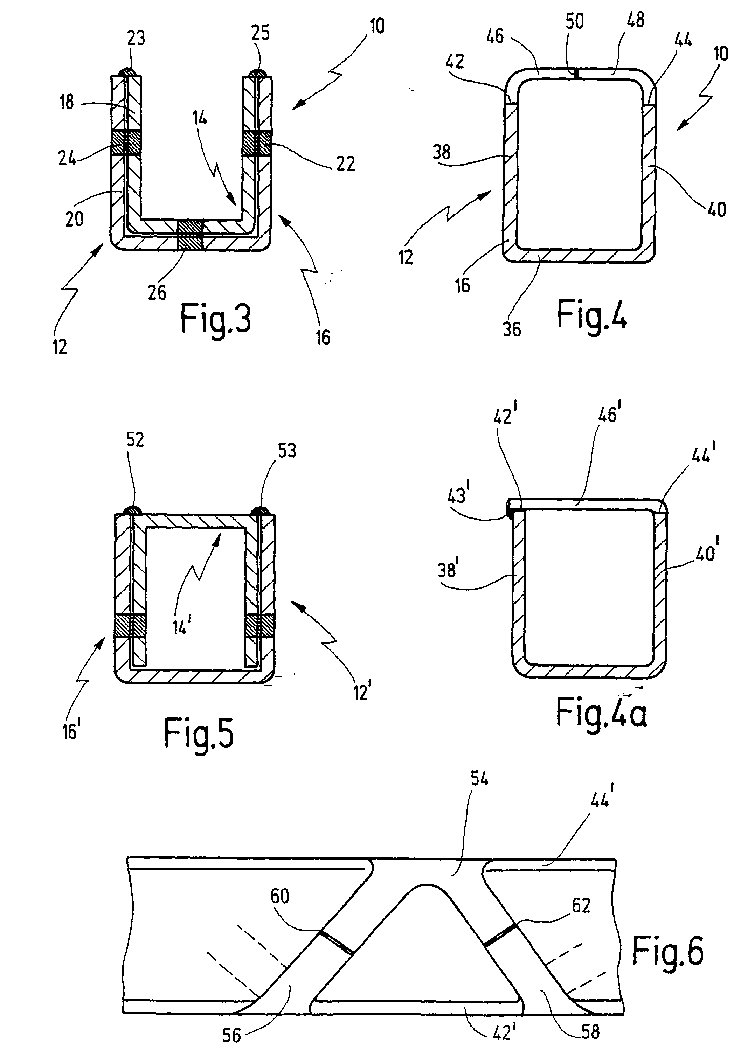

Der axiale Endabschnitt 18 und der axiale Endabschnitt 20 sind über Lochschweißungen 22, 24 oder über Stirnstoßnähte 23 und 25 und über eine Lochschweißung 26 sowie über eine Kehlnaht 27 stoffschlüssig miteinander verbunden (vgl. auch Fig. 3).

Während in Fig. 1 die Profilteile 14 und 16 in Längsrichtung des Strebenkörpers 12 in gerader Ausrichtung zueinander angeordnet sind, können die Profilteile 14 und 16 aufgrund der in Längsrichtung mehrteiligen Ausgestaltung auch mit einem Winkelversatz zueinander gefügt werden, so daß in einem solchen Fall der Strebenkörper 12 keinen geraden, sondern einen geknickten Verlauf annimmt.

An dem dem axialen Endabschnitt 18 gegenüberliegenden Ende weist das erste Profilteil 14 eine Lagerbuchse 28 mit einer Lageröffnung 29 auf. Entsprechend weist das zweite Profilteil 16 an seinem dem axialen Endabschnitt 20 gegenüberliegenden Ende eine Lagerbuchse 30 mit einer entsprechenden, nicht dargestellten Lageröffnung auf.

Die Lagerbuchsen 28 bzw. 30 können an das Profilteil 14 bzw. 16 einstückig angeformt oder als Rohrstücke oder als Stanzteile angeschweißt sein.

In Fig. 1 eingezeichnete Lagerachsen 32 und 34 verlaufen in dem gezeigten Ausführungsbeispiel parallel zueinander, jedoch können aufgrund der in Längsrichtung mehrteiligen Ausgestaltung des Strebenkörpers 12 wie oben beschrieben durch einen entsprechenden Winkelversatz der Profilteile 16 und 14 zueinander die Lagerachsen 32 und 34 auch nicht parallel zueinander verlaufen, wenn eine solche Stabilisierungsstrebe aufgrund baulicher Gegebenheiten des Fahrzeuges gewünscht ist, was bei gerader Ausrichtung der Profilteile 14 und 16 auch erreicht werden kann, wenn die Lagerbuchsen 28 und 30 nicht rechtwinklig zum Strebenkörper 12 an diesen angeformt werden.

Die Erfindung ist jedoch nicht auf eine in Längsrichtung des Strebenkörpers 12 mehrteilige Ausgestaltung der Stabilisierungsstrebe 10 beschränkt, sondern die Stabilisierungsstrebe 10 kann auch in Längsrichtung einteilig bzw. einstückig ausgebildet sein.

Der Strebenkörper 12 ist im Querschnitt als entlang seiner Längsrichtung zumindest axial abschnittsweise einseitig offenes Profil geformt. Wie aus Figuren 3 und 4 hervorgeht, ist der Strebenkörper 12 im wesentlichen als U-Profil geformt, das einen Bodenabschnitt 36 und zwei quer dazu verlaufende Wandabschnitte 38 und 40 aufweist. Wie in Fig. 1 und 2 dargestellt ist, sind im Bodenabschnitt und in den Wandabschnitten 38 und 40 Lochstanzungen 39 und 41 ausgebildet, wodurch eine weitere Gewichtsreduzierung erreicht wird, die Biegesteifigkeit aber nicht beeinträchtigt wird.

Das Profil kann im Unterschied zu Fig. 1 in Längsrichtung gesehen auch unterschiedliche Querschnittsformen und unterschiedliche Querschnittsgrößen aufweisen, beispielsweise Aufweitungen oder Verengungen. Auf diese Weise kann die Biegesteifigkeit durch Aufweitungen oder Einziehungen weiter verbessert werden.

Der Strebenkörper 12 ist im Querschnitt, d.h. in Umfangsrichtung, axial abschnittsweise einseitig offen, wobei Längsränder 42 und 44 des Strebenkörpers 12, die freie Enden der Wandabschnitte 38 und 40 darstellen, axial abschnittsweise miteinander einstückig zu einem geschlossenen Profil verbunden sind. Die Längsränder 42 und 44 sind beispielhaft für das Profilteil 16 bezeichnet, wobei es sich als selbstverständlich versteht, daß auch das Profilteil 14 derartige Längsränder aufweist.

Die Profilteile 14 und 16 sind jeweils einteilig ausgebildet.

Die einstückige Verbindung der Längsränder 42 und 44 ist durch zumindest eine, im gezeigten Ausführungsbeispiel mehrere Laschen 46, realisiert, die an zumindest einem der Längsränder 42 bzw. 44 einstückig angeformt sind.

In dem gezeigten Ausführungsbeispiel gemäß Figuren 1 bis 4 sind sowohl an dem Längsrand 42 als auch an dem Längsrand 44 eine Lasche 46 und eine Lasche 48 einstückig angeformt, wobei die Laschen 46 und 48 einander gegenüberliegen und zwischen den Längsrändern 42 und 44 über eine Schweißnaht 50 oder Lötnaht oder ein sonstiges Verbindungsverfahren gefügt sind.

In Längsrichtung des Strebenkörpers 12 sind mehrere solcher Laschenpaare aus Laschen 46 und 48 verteilt angeordnet, so daß der Strebenkörper 12 in den Bereichen, in denen die Laschen 46 und 48 vorhanden sind, ein geschlossenes Profil darstellt.

Die Laschenpaare aus den Laschen 46 und 48 bilden dabei quer zur Längsrichtung des Strebenkörpers 12 verlaufende Stege.

Solche Stege können jedoch auch schräg zur Längsrichtung des Strebenkörpers 12 verlaufen, wie später anhand eines anderen Ausführungsbeispieles noch beschrieben wird.

In Fig. 4a ist ein gegenüber Fig. 1 bis 4 geringfügig abgewandeltes Ausführungsbeispiel dargestellt, bei dem die zumindest eine Lasche 46' an dem Längsrand 44' des Wandabschnitts 40' einstückig angeformt ist, während das freie Ende der Lasche 46' mit dem gegenüberliegenden Längsrand 42' über eine Kehlnaht 43' verschweißt ist. Das freie Ende der Lasche 46' überragt dazu den Längsrand 42' seitlich geringfügig, wodurch die Kehlnaht 43' auf einfache Weise gesetzt werden kann.

Das erste Profilteil 14 bzw. das zweite Profilteil 16 sind jeweils als Stanzteile hergestellt, wobei die Laschen 46 und 48 durch den Stanzvorgang beim Ausstanzen aus einem plattenförmigen Rohling an den Längsrändern 42 bzw. 44 stehen bleiben.

Bei einer insgesamt einteiligen Ausgestaltung des Strebenkörpers 12 kann dieser somit aus einem einzigen plattenförmigen Rohling durch Stanzen, Umformen zu dem Profil und stoffschlüssiges Verbinden der Laschen 46 und 48 mit geringem Zeitaufwand kostengünstig hergestellt werden.

Ebenfalls können die Lagerbuchsen 28 und 30, wie bereits erwähnt, bei dem zuvor beschriebenen Stanzvorgang aus dem plattenförmigen Rohling in einstückiger Weise mit dem Strebenkörper 12 verbunden angeformt sein.

Bei einem Verfahren zum Herstellen der Stabilisierungsstrebe 10 kann dieses somit aus einem plattenförmigen Rohling zu einem Profil geformt werden, indem der Strebenkörper 12 zu einem in Längsrichtung einseitig offenen Profil geformt wird, und dessen Längsränder 42 und 44 zumindest axial abschnittsweise einstückig zu einem geschlossenen Profil miteinander verbunden werden, und zwar in dem gezeigten Ausführungsbeispiel mittels der Laschen 46 und 48, die vor ihrem Fügen ebenfalls in dem Umformvorgang, bei dem das U-Profil geformt wird, in die entsprechende Lage gemäß Fig. 4 gebogen werden.

Die Laschen 46 und 48 werden beim Herstellungsverfahren, wie ebenfalls bereits erwähnt, beim Stanzen an dem plattenförmigen Rohling durch Stehenlassen von Material angeformt.

Im Fall der in Längsrichtung des Strebenkörpers 12 zweiteiligen Ausgestaltung der Stabilisierungsstrebe 10 mit einem ersten Profilteil 14 und einem zweiten Profilteil 16 werden die beiden Profilteile 14 und 16 nach ihrer Fertigstellung mit ihren axialen Endabschnitten 18 und 20, wie in Fig. 1 dargestellt, überlappt und durch die Lochschweißungen 22, 24 und 26 bzw. die Kehlnaht 27 gefügt.

Während gemäß Fig. 3 die Profilteile 14 und 16 mit ihrer jeweiligen Offenseite in die gleiche Richtung zeigend zu dem Strebenkörper 12 gefügt sind, ist in Fig. 5 in einem demgegenüber abgewandelten Ausführungsbeispiel das Profilteil 14' und das Profilteil 16' mit ihrer jeweiligen Offenseite in entgegengesetzte Richtung zeigend zu dem Strebenkörper 12' gefügt. Im Überlappungsbereich A der Profilteile 14' und 16' entsteht somit ein axial abschnittsweise geschlossenes Profil des Strebenkörpers 12'. Anstelle der bodenseitigen Lochschweißung 26 in Fig. 3 werden das Profilteil 14' und 16' hier über Stirnstoßnähte 52 und 53 miteinander verschweißt, und die seitlichen Lochschweißungen 22 und 24 in Fig. 3 sind in der Fig. 5 weiter nach unten verlagert.

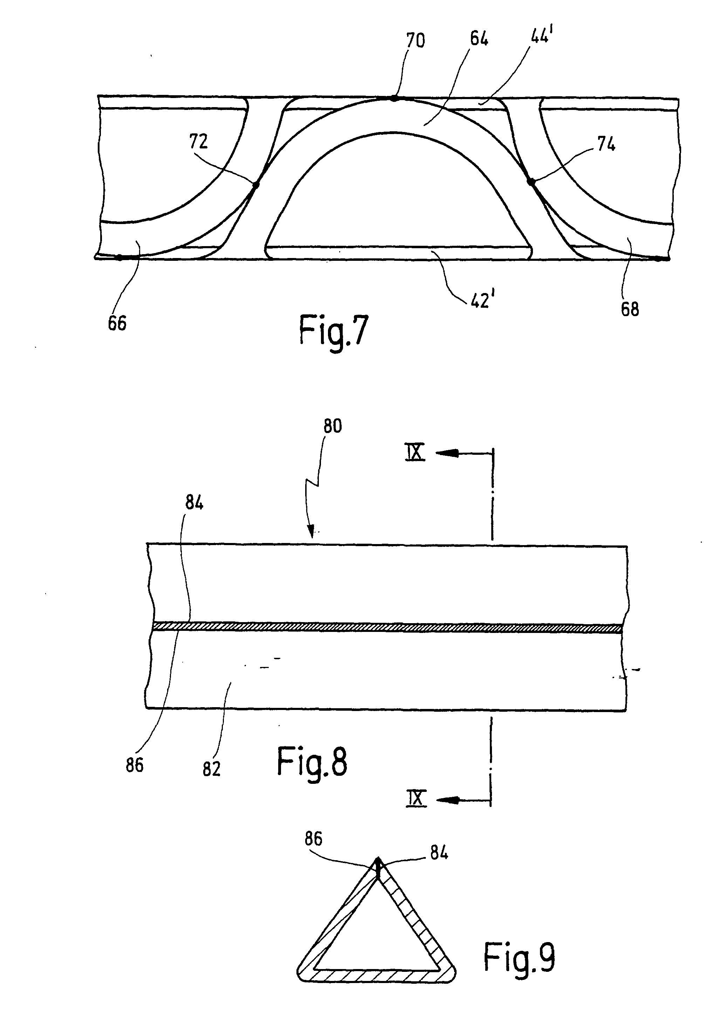

In Figuren 6 und 7 sind Abwandlungen für die geometrische Anordnung und Ausgestaltung der Laschen 46 und 48 in Figuren 1 bis 4 dargestellt.

In Fig. 6 ist eine Laschenanordnung aus drei Laschen 54, 56 und 58 dargestellt, die gemeinsam ein V aufspannen. An Schweißnähten 60 und 62 ist die Lasche 54 mit den Laschen 56 und 58 gefügt.

Die gleiche V-förmige Anordnung kann auch erzielt werden, wenn nur zwei Laschen vorhanden wären, die beide an dem Längsrand 44' einstückig angeformt sind, in der Art eines V in entgegengesetzten Richtungen schräg zur Längsrichtung des Längsrands 44' zeigen und entsprechend mit dem gegenüberliegenden Längsrand 42' verschweißt sind. Die Laschen 56 und 58 können aber auch wie die Lasche 54 ausgebildet sein, wie mit unterbrochenen Linien angedeutet ist, so daß insgesamt eine fortlaufende Zick-Zack-Anordnung von Laschen entsteht und eine hohe Biegesteifigkeit erzielt wird.

In Fig. 7 ist eine Laschenanordnung dargestellt, die aus bogenförmig ausgebildeten Laschen 64, 66 und 68 gebildet ist, wobei jede der Laschen 64, 66 und 68, wie für die Lasche 64 gezeigt, an zwei axial beabstandeten Stellen an dem selben Längsrand 42' einstückig angeformt ist. Am gegenüberliegenden Längsrand 44' sind die Laschen 64, 66 und 68 mit ihren Scheitelpunkten 70 mit dem Längsrand 44' verschweißt.

Jeweils benachbarte der Laschen 64 und 66 bzw. 64 und 68 sind ebenfalls an Berührungspunkten 72 bzw. 74 miteinander verschweißt.

Die vorhergehenden Ausführungsbeispiele zeigen, daß es im Rahmen der Erfindung vielfältige Möglichkeiten der Ausgestaltung einer Laschenverbindung der Längsränder des einseitig offenen Profils gibt.

In Figuren 8 und 9 ist schließlich ein weiteres Ausführungsbeispiel einer Stabilisierungsstrebe 80 dargestellt, die sich von den vorhergehenden Ausführungsbeispielen dadurch unterscheidet, daß ihr Strebenkörper 82 im wesentlichen als im Querschnitt dreieckiges Profil geformt ist, das an Längsrändern 84 und 86 durch direktes Verbinden der Längsränder 84 und 86 geschlossen ist.

Ein solches Profil kann ebenfalls aus einem plattenförmigen Rohling durch einen Umformvorgang zu dem dreieckigen Profilquerschnitt geformt werden, wobei anschließend die Längsränder 84 und 86 zumindest abschnittsweise miteinander durch eine Schweißnaht verbunden werden. Auf diese Weise wird ein vollkommen geschlossenes Kastenprofil realisiert, das insgesamt einstückig bzw. einteilig ist, und somit kostengünstig und mit geringem Zeitaufwand hergestellt werden kann.

In Abwandlung dieser Ausgestaltung kann das Profil abschnittsweise auch im Querschnitt U-förmig ausgebildet und durch nur abschnittsweises direktes Verbinden der Längsränder 84 und 86 zu dem dargestellten dreieckigen Querschnitt verformt werden.

## Patentansprüche

1. Stabilisierungsstrebe, insbesondere für ein Fahrwerk eines Fahrzeugs, insbesondere Wattstrebe, mit einem länglichen Strebenkörper (12; 82), der als Profil ausgebildet ist, **dadurch gekennzeichnet, daß** der Strebenkörper (12; 82) als entlang seiner Längsrichtung zumindest abschnittsweise im Querschnitt einseitig offenes Profil geformt ist, dessen beide Längsränder (42, 44; 84, 86) zumindest axial abschnittsweise miteinander einstückig zu einem geschlossenen Profil verbunden sind.

2. Stabilisierungsstrebe nach Anspruch 1, **dadurch gekennzeichnet, daß** die Längsränder (42, 44) mittels zumindest einer sich in Längsrichtung des Strebenkörpers (12) axial teilweise erstreckenden Lasche (46, 48; 54, 56, 58; 64, 66, 68) verbunden sind, die an zumindest einem der Längsränder (42, 44) einstückig angeformt ist.

3. Stabilisierungsstrebe nach Anspruch 2, **dadurch gekennzeichnet, daß** an beiden Längsrändern (42, 44) jeweils eine Lasche (46, 48; 54, 56, 58; 64, 66, 68) angeformt ist, so daß die beiden Laschen (46, 48; 54, 56, 58; 64, 66, 68) einander gegenüberliegen und zwischen den Längsrändern (42, 44) miteinander verbunden sind.

4. Stabilisierungsstrebe nach Anspruch 2, **dadurch gekennzeichnet, daß** die zumindest eine Lasche (46') an dem einen Längsrand (40') einstückig angeformt ist und mit dem anderen Längsrand (42') verbunden ist.

5. Stabilisierungsstrebe nach einem der Ansprüche 2 bis 4, **dadurch gekennzeichnet, daß** die zumindest eine Lasche (46, 48; 54, 56, 58) quer oder schräg zur Längsrichtung des Strebenkörpers (12) in der Art eines Stegs verläuft.

6. Stabilisierungsstrebe nach einem der Ansprüche 2 bis 5, **dadurch gekennzeichnet, daß** zumindest zwei Laschen (54, 56, 58) vorhanden sind, die miteinander ein V bilden.

7. Stabilisierungsstrebe nach einem der Ansprüche 2 bis 4, **dadurch gekennzeichnet, daß** die zumindest eine Lasche (64, 66, 68) bogenförmig ausgebildet ist, wobei die Lasche (64, 66, 68) an zwei axial beabstandeten Stellen an demselben Längsrand (42, 44) des Strebenkörpers (12) angeformt ist.

8. Stabilisierungsstrebe nach einem der Ansprüche 2 bis 7, **dadurch gekennzeichnet, daß** der Strebenkörper (12) als Stanzteil hergestellt ist, wobei die zumindest eine Lasche (46, 48; 54, 56, 58; 64, 66, 68) durch den Stanzvorgang durch Stehenlassen von Material an einem der Längsränder (42, 44) ausgebildet ist.

9. Stabilisierungsstrebe nach einem der Ansprüche 1 bis 7, **dadurch gekennzeichnet, daß** der Strebenkörper (12) zumindest axial abschnittsweise im wesentlichen als U-Profil geformt ist, das axial abschnittsweise durch Verbindung der Längsränder (42, 44) geschlossen ist.

10. Stabilierungsstrebe nach Anspruch 1, **dadurch gekennzeichnet, daß** der Strebenkörper (82) zumindest axial abschnittsweise im wesentlichen als im Querschnitt dreieckiges Profil geformt ist, das an den Längsrändern (84, 86) zunächst offen und durch direktes Verbinden der Längsränder (84, 86) geschlossen ist.

11. Stabilisierungsstrebe nach einem der Ansprüche 1 bis 10, **dadurch gekennzeichnet, daß** der Strebenkörper in Längsrichtung hinsichtlich Form und/oder Querschnittsgröße einen unterschiedlichen Querschnitt aufweist.

12. Stabilisierungsstrebe nach einem der Ansprüche 1 bis 11, **dadurch gekennzeichnet, daß** an den Längsenden des Strebenkörpers (12; 82) jeweils eine Lagerbuchse (28, 30) angeordnet ist.

13. Stabilisierungsstrebe nach einem der Ansprüche 1 bis 12, **dadurch gekennzeichnet, daß** der Strebenkörper (12; 82) in Längsrichtung aus zumindest zwei Profilteilen (14, 16) gefügt ist, die in Längsrichtung einander teilweise überlappend angeordnet und im Überlappungsbereich miteinander verbunden sind.

14. Stabilisierungsstrebe nach Anspruch 13, **dadurch gekennzeichnet, daß** die Profilteile (14, 16) mit ihrer jeweiligen Offenseite in die gleiche Richtung zeigend zu dem Strebenkörper (12) gefügt sind.

15. Stabilisierungsstrebe nach Anspruch 13, **dadurch gekennzeichnet, daß** die Profilteile (14', 16') mit ihrer jeweiligen Offenseite in entgegengesetzte Richtung zeigend zu dem Strebenkörper (12) gefügt sind.

16. Verfahren zum Herstellen einer Stabilisierungsstrebe (10; 80) nach einem der Ansprüche 1 bis 15, wobei ein Strebenkörper (12; 82) aus einem plattenförmigen Rohling zu einem Profil geformt wird, **dadurch gekennzeichnet, daß** der Strebenkörper (12; 82) zunächst zu einem im Querschnitt einseitig offenen Profil geformt wird, und dessen Längsränder (42, 44; 84, 86) zumindest axial abschnittsweise einstückig zu einem geschlossenen Profil miteinander verbunden werden.

17. Verfahren nach Anspruch 16, **dadurch gekennzeichnet, daß** der plattenförmige Rohling als Stanzteil gefertigt wird, an dem zumindest eine Lasche (46, 48; 54, 56, 58; 64, 66, 68) beim Stanzen durch Stehenlassen von Material angeformt wird, über die die Längsränder (42, 44) des Strebenkörpers (12) nach der Formung zu dem Profil miteinander verbunden werden.

18. Verfahren nach Anspruch 16 oder 17, **dadurch gekennzeichnet, daß** der Strebenkörper (12; 82) in Längsrichtung aus zumindest zwei Profilteilen (14, 16) hergestellt wird, die in Längsrichtung teilweise überlappt und im Überlappungsbereich miteinander verbunden werden.

## Claims

1. A stabilizing strut, in particular for a chassis of a vehicle, in particular Watt strut, comprising an elongate strut body (12; 82) which is designed as a profile, **characterized in that** the strut body (12; 82) is formed as a profile which, in cross section, is open on one side at least in some sections along its longitudinal direction and the two longitudinal edges (42, 44; 84, 86) of which are connected integrally to each other, at least in some axial sections, to give a closed profile.

2. The stabilizing strut of claim 1, **characterized in that** the longitudinal edges (42, 44) are connected by means of at least one link (46, 48; 54, 56, 58; 64, 66, 68) which extends in part axially in the longitudinal direction of the strut body (12) and is formed integrally onto at least one of the longitudinal edges (42, 44).

3. The stabilizing strut of claim 2, **characterized in that** a respective link (46, 48; 54, 56, 58; 64, 66, 68) is formed onto the two longitudinal edges (42, 44), with the result that the two links (46, 48; 54, 56, 58; 64, 66, 68) lie opposite each other and are connected to each other between the longitudinal edges (42, 44).

4. The stabilizing strut of claim 2, **characterized in that** the at least one link (46') is formed integrally onto the one longitudinal edge (40') and is connected to the other longitudinal edge (42').

5. The stabilizing strut of anyone of claims 2 through 4, **characterized in that** the at least one link (46, 48; 54, 56, 58) runs transversely or obliquely to the longitudinal direction of the strut body (12) in the manner of a web.

6. The stabilizing strut of anyone of claims 2 through 5, **characterized in that** there are at least two links (54, 56, 58) which form a V with one another.

7. The stabilizing strut of anyone of claims 2 through 4, **characterized in that** the at least one link (64, 66, 68) is of curved design, the link (64, 66, 68) being formed on at two axially spaced-apart points on the same longitudinal edge (42, 44) of the strut body (12).

8. The stabilizing strut of anyone of claims 2 through 7, **characterized in that** the strut body (12) is produced as a punched part, the at least one link (46, 48; 54, 56, 58; 64, 66, 68) being formed by the punching process, by material being left on one of the longitudinal edges (42, 44).

9. The stabilizing strut of anyone of claims 1 through 7, **characterized in that** the strut body (12) is formed, at least in some axial sections, essentially as a U-profile which is closed in some axial sections by connecting the longitudinal edges (42, 44).

10. The stabilizing strut of claim 1, **characterized in that** the strut body (82) is formed, at least in some axial sections, essentially as a profile which is triangular in cross section, is initially open at the longitudinal edges (84, 86) and is closed by direct connection of the longitudinal edges (84, 86).

11. The stabilizing strut of anyone of claims 1 through 10, **characterized in that** the strut body differs in cross section with regard to shape and/or cross-sectional size in the longitudinal direction.

12. The stabilizing strut of anyone of claims 1 through 11, **characterized in that** a respective bearing bushing (28, 30) is arranged at the longitudinal ends of the strut body (12; 82).

13. The stabilizing strut of anyone of claims 1 through 12, **characterized in that** the strut body (12; 82) is joined in the longitudinal direction from at least two profile parts (14, 16) which are arranged partially overlapping one another in the longitudinal direction and are connected to one another in the overlapping region.

14. The stabilizing strut of claim 13, **characterized in that** the profile parts (14, 16) are joined, with their respective open side pointing in the same direction, to give the strut body (12).

15. The stabilizing strut of claim 13, **characterized in that** the profile parts (14', 16') are joined, with their respective opening side pointing in the opposite direction, to give the strut body (12).

16. A method for producing a stabilizing strut (10; 80) of anyone of claims 1 through 15, a strut body (12; 82) being formed from a sheet-like blank to give a profile, **characterized in that** the strut body (12; 82) is initially formed to give a profile which, in cross section, is open on one side, and the longitudinal edges (42, 44; 84, 86) of which are connected integrally to each other at least in some axial sections to give a closed profile.

17. The method of claim 16, **characterized in that** the sheet-like blank is manufactured as a punched part onto which at least one link (46, 48; 54, 56, 58; 64, 66, 68) is formed during the punching process, by material being left, the link being used to connect the longitudinal edges (42, 44) of the strut body (12) to each other after the forming process to give the profile.

18. The method of claim 16 or 17, **characterized in that** the strut body (12; 82) is produced in the longitudinal direction from at least two profile parts (14, 16) which are partially overlapped in the longitudinal direction and are connected to one another in the overlapping region.

## Revendications

1. Entretoise de stabilisation, en particulier pour le châssis d'un véhicule, en particulier barre de Watt, comportant un corps d'entretoise (12 ; 82) allongé, qui est réalisé en tant que profilé, **caractérisée en ce que** le corps d'entretoise (12 ; 82) a la forme d'un profilé dont la section transversale est ouverte d'un côté au moins par endroits dans le sens de la longueur, dont les deux bords longitudinaux (42, 44, 84, 86) sont reliés entre eux d'un seul tenant au moins par endroits axialement en un profilé fermé.

2. Entretoise de stabilisation selon la revendication 1, **caractérisée en ce que** les bords longitudinaux (42, 43) sont reliés entre eux au moyen d'une patte (46, 48 ; 54, 56, 58 ; 64, 66, 68) s'étendant en partie axialement dans le sens de la longueur du corps d'entretoise (12), qui est formée d'un seul tenant sur au moins l'un des bords longitudinaux (42, 44).

3. Entretoise de stabilisation selon la revendication 2, **caractérisée en ce que** sur chacun des deux bords longitudinaux (42, 44) est formée une patte (46, 48 ; 54, 56, 58 ; 64, 66, 68) telle que les deux pattes (46, 48 ; 54, 56, 58 ; 64, 66, 68) soient en vis-à-vis et soient reliées entre elles entre les bords longitudinaux (42, 44).

4. Entretoise de stabilisation selon la revendication 2, **caractérisée en ce que** la ou les pattes (46') sont formées d'un seul tenant sur un bord longitudinal (40') et sont reliées à l'autre bord longitudinal (42').

5. Entretoise de stabilisation selon l'une des revendications 2 à 4, **caractérisée en ce que** la ou les pattes (46, 48 ; 54, 56, 58) s'étendent perpendiculairement ou obliquement à la direction longitudinale du corps d'entretoise (12) à la manière d'une traverse.

6. Entretoise de stabilisation selon l'une des revendications 2 à 5, **caractérisée en ce que** sont prévues au moins deux pattes (55, 56, 58) qui forment ensemble un V.

7. Entretoise de stabilisation selon l'une des revendications 2 à 4, **caractérisée en ce que** la ou les pattes (64, 66, 68) sont réalisées en forme d'arc, la patte (64, 66, 68) étant raccordée en deux points axialement espacés sur le même bord longitudinal (42, 44) du corps d'entretoise (12).

8. Entretoise de stabilisation selon l'une des revendications 2 à 7, **caractérisée en ce que** le corps d'entretoise (12) est fabriqué en tant que pièce estampée, la ou les pattes (46, 48 ; 54, 56, 58 ; 64, 66, 68) étant réalisées par le processus d'estampage en laissant subsister de la matière sur l'un des bords longitudinaux (42, 44).

9. Entretoise de stabilisation selon l'une des revendications 1 à 7, **caractérisée en ce qu'**au moins par endroits axialement, le corps d'entretoise (12) a sensiblement la forme d'un profilé en U qui est fermé par endroits axialement par liaison des bords longitudinaux (42, 44).

10. Entretoise de stabilisation selon la revendication 1, **caractérisée en ce qu'**au moins par endroits axialement, le corps d'entretoise (82) a sensiblement la forme d'un profilé de section triangulaire qui est d'abord ouvert sur ses bords longitudinaux (84, 86) et est fermé par liaison directe des bords longitudinaux (84, 86).

11. Entretoise de stabilisation selon l'une des revendications 1 à 10, **caractérisée en ce que** le corps d'entretoise présente une section transversale variable dans la direction longitudinale, en ce qui concerne la forme et/ou la dimension de la section transversale.

12. Entretoise de stabilisation selon l'une des revendications 1 à 11, **caractérisée en ce qu'**à chacune des extrémités de la longueur du corps d'entretoise (12 ; 82) est disposé un coussinet (28, 30).

13. Entretoise de stabilisation selon l'une des revendications 1 à 12, **caractérisée en ce que** le corps d'entretoise (12 ; 82) est constitué dans le sens de la longueur d'au moins deux parties de profilé (14, 16) assemblées qui sont disposées de manière à se recouvrir partiellement dans le sens de la longueur et sont reliées entre elles dans la zone du recouvrement.

14. Entretoise de stabilisation selon la revendication 13, **caractérisée en ce que** les parties de profilé (14, 16) sont assemblées pour former le corps d'entretoise (12) avec leurs côtés ouverts respectifs dirigés dans le même sens.

15. Entretoise de stabilisation selon la revendication 13, **caractérisée en ce que** les parties de profilé (14', 16') sont assemblées pour former le corps d'entretoise (12) avec leurs côtés ouverts respectifs dirigés en sens opposés.

16. Procédé de fabrication d'une entretoise de stabilisation (10 ; 80) selon les revendications 1 à 15, dans lequel un corps d'entretoise (12; 82) est formé en un profilé à partir d'une ébauche en forme de plaque, **caractérisé en ce que** le corps d'entretoise (12 ; 82) est d'abord formé en un profilé de section transversale ouverte d'un côté, et ses bords longitudinaux (42, 44 ; 84, 86) sont reliés entre eux d'un seul tenant, au moins par endroits axialement, en un profilé fermé.

17. Procédé selon la revendication 16, **caractérisé en ce que** l'ébauche en forme de plaque est fabriquée en tant que pièce estampée sur laquelle est formée au moins une patte (46, 48 ; 54, 56, 58 ; 64, 66, 68) en laissant subsister de la matière pendant l'estampage, patte par laquelle les bords longitudinaux (42, 44) du corps d'entretoise (12) sont reliés entre eux après le formage en profilé.

18. Procédé selon la revendication 16 ou 17, **caractérisé en ce que** le corps d'entretoise (12 ; 82) est réalisé dans le sens de la longueur à partir d'au moins deux parties de profilé (14, 16) qui se recouvrent partiellement dans le sens de la longueur et sont reliées entre elles dans la zone du recouvrement.
